# EUROPEAN PATENT APPLICATION

(11) **EP 4 181 044 A1**
(43) Date of publication of application: **17.05.2023**
(21) Application number: 21208476.8
(22) Date of filing: 16.11.2021
(51) Int. Cl.: G06Q 20/12, G06Q 20/18, G06Q 20/32, G06Q 20/36, G06Q 20/40

(54) **PRE-AUTHENTICATED TOKEN FOR USE IN PAYMENT TRANSACTIONS AND DATA ACCESS**

(71) Applicant: Mastercard International Incorporated, Purchase NY 10577 (US)
(72) Inventor: KALLUGUDDE, Manu Dharmaiah, Berkshire, SL6 2GG (GB); PADHIARY, Satya Sudipta, 400050 Mumbai, Maharashtra (IN); WARDZIAK, Tomasz, Zyrardów, Mazovia (PL)
(74) Representative: Gill Jennings & Every LLP

(57) **Abstract**

The invention provides techniques for pre-authenticating a token such that the relatively time-consuming process of performing an authentication based on a credential supplied by the user is done at a time other than the time at which the token is being used. The invention also enables the user to tightly control parameters of the pre-authentication such as an amount of funds pre-authorised, a frequency at which an operation relating to the token can be carried out and the type of user data that can be obtained through use of the token.

## Description

### BACKGROUND

Users are increasingly making use of software applications to interact with a third party in order to perform some action relating to assets owned by the user. The interaction typically involves the user authenticating themselves in some manner so that the third party can be sure that they are dealing with a genuine user rather than an attempt to commit fraud, steal data, etc.

One example of this is the use of a digital wallet to make a payment using a user electronic device. A common way in which this is implemented is an app presenting a user interface to the user that enables the user to select the goods or services that they wish to order. Once complete, an electronic checkout process takes place in which an e-commerce (card not present) transaction is performed using a payment credential ('token') associated with a digital wallet application on the user's device. Once the user's payment has been authorised, the merchant provides the goods/services that have been ordered by the user.

A key part of the payment process is authentication. This involves the user providing an authentication credential to enable their authority to initiate the transaction to be confirmed. Authentication can take may forms and in the case of digital wallets this typically involves the user entering a PIN and/or providing biometric data. Authentication is currently required for all transactions involving digital wallets irrespective of their value. This can lead to user frustration, particularly in situations where the user is providing the authentication in a time-sensitive scenario, such as entering or exiting a busy terminal of a transit network.

Additionally, it is sometimes necessary to perform step-up authentication to check whether the instruction sent from the app is a genuine instruction. Step-up authentication is a known technique where a secondary authentication credential is requested from a user, often via a separate channel to that being used for ordering the goods or services. This is also referred to as two-factor authentication. A commonly used example is a one-time PIN sent to the user's device via SMS for entry into the app.

However, a problem with this process is that leads to poor user experience. Data shows that in Europe in 2020, in 28% of cases a user did not complete the step-up authentication check successfully. Fraud rates are expected to be far lower than 28% of all transactions, indicating that a good proportion of the step-up authentication checks relate to genuine users that do not complete the authentication check. This could be because the mechanism that the user requires to complete the step-up authentication is not available to them, e.g. the one-time PIN is sent an old telephone number that they no longer have access to, or the user does not have convenient access to their phone. Alternatively, the user may be put off by the additional effort involved in completing the step-up authentication check, e.g. logging into an email account, checking a phone that is not conveniently located, etc.

Another scenario in which user assets are made use of by a third party is in the sharing of personal data by a user. Typically a user has to register an account with the third party and submit their personal data via this account. At this point the user loses control of their personal data as once it is submitted they have no control over how and when the organisation accesses their personal data. Additionally, the user must re-enter personal data that changes, as well as supply the same personal data again to another organisation that requires it. These factors combined generate an unsatisfactory user experience.

What is required is an authentication process that is convenient for the user and which also provides sufficient security to guard against attempts at fraud. The authentication process would also advantageously be usable in a real-time scenario such as making a payment or requesting entry or exit at a transit system terminal. The authentication process would further advantageously enable the user to have good control over their assets, e.g. personal data or funds stored in a user account.

### SUMMARY OF THE INVENTION

Broadly speaking the invention provides techniques for pre-authenticating a token such that the relatively time-consuming process of performing an authentication based on a credential supplied by the user is done at a time other than the time at which the token is being used. The invention also enables the user to tightly control parameters of the pre-authentication such as an amount of funds pre-authorised, a frequency at which an operation relating to the token can be carried out and the type of user data that can be obtained through use of the token.

In a first aspect the invention provides a computer-implemented method for generating a token for use in authorising an action relating to a user, the method comprising: obtaining, by a token management computer and from a user device, a frequency value, a permission value and a user authentication credential, wherein the frequency value specifies a frequency at which an operation relating to the token is allowed to be performed, and the permission value specifies an allowed value or range of allowed values for a parameter associated with the action; and authenticating, by the token management computer, the user using the user authentication credential; following successful authentication of the user: generating, by the token management computer, a token, the token comprising a data structure including at least a frequency field storing the frequency value and a permission field storing the permission value, the token associated with the user; and transmitting the token to the user device.

In a second aspect the invention provides a computer-readable medium comprising computer-readable instructions stored thereon which, when executed by a processor, cause the processor to perform the method of the first aspect.

In a third aspect the invention provides one or more computers configured to perform the method of the first aspect.

Preferred embodiments of the invention are set out in the appended dependent claims.

### BRIEF DESCRIPTION OF THE DRAWINGS

Embodiments of the present invention are described below, by way of example only, with reference to the accompanying drawings, in which:
Figure 1 illustrates in schematic form a system suitable for implementing the invention.
Figure 2 is a flow diagram showing a process for generating a token according to an embodiment.
Figure 3 is a flow diagram showing a process for handling a request to authorise an action using a token, according to an embodiment.
Figure 4 is a flow diagram showing a process for handling a payment transaction using a token, according to an embodiment.
Figure 5 is a flow diagram showing a process for generating a top up request using a token, according to an embodiment.
Figure 6 is a flow diagram showing a process for handling a top up request using a token, according to an embodiment.
Figure 7 is a flow diagram showing a process for carrying out a transaction in a transit system and using a token, according to an embodiment.
Figure 8 is a flow diagram showing a process for handling a request for accessing user data using a token, according to an embodiment.

### DETAILED DESCRIPTION

In this specification the term 'computer' is understood to mean any electronic device capable of processing digital data. Many implementations of the invention will involve cloud-based computing resources and so a 'computer' is understood to encompass a collection of cloud-based resources that are available to perform computing. The term 'computer' is therefore not restricted to a single collection of physically co-located hardware but instead should be understood as also encompassing distributed computing systems and also to encompass both physical and virtual computational resources, e.g. virtual machine(s) hosted in a cloud environment.

In this specification the term 'user device' is understood to mean a computer that is owned by a user. Examples of user devices include: a mobile phone, a tablet computer, and a laptop computer, a smart television, a gaming console, a wearable such as a smart watch, and the like.

In this specification the labelling of a computer or device as associated with a particular entity (e.g. a user, a merchant, an issuer, etc.) is understood to indicate that the owning entity has control over that computer. This enables the owning entity to have use of the computer as they deem necessary to perform the invention and to exert control over aspects of the computer, such as access control via a PIN code or password. Ownership of a computer may indicate a level of trust in the computer.

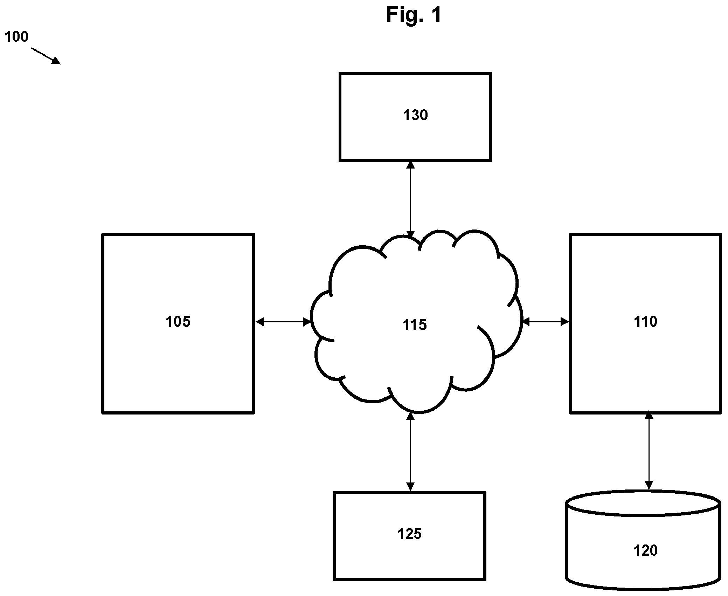

Referring now to Fig. 1, a system 100 suitable for implementing the invention is shown in schematic form. System 100 includes a user device 105 and a token management computer 110. User device 105 and token management computer 110 are communicatively coupled to one another by a network 115 which can be any packet switched or circuit switched network, or a combination of a packet switched and a circuit switched sub-network; e.g. network 115 could be the internet, or the internet in combination with a cellular network, or a cellular network, etc.

Token management computer 110 is communicatively coupled to a data repository 120 that is capable of storing tokens of the type described in the following. System 100 also includes a credential authorisation computer 125 that is communicatively coupled to token management computer 110 via network 115.

System 100 further includes an authorisation computer 130 that is communicatively coupled to token management computer 110 via network 115. Although illustrated as two distinct computers in Fig. 1, in some embodiments the function of authorisation computer 130 and credential authorisation computer 125 are implemented by a single computer.

Fig. 1 does not provide an exhaustive list of components capable of implementing the invention. System 100 can additionally or alternatively include other components such as any combination of: a merchant computer, a payment network computer, an issuer computer, a data requestor computer of a third party, an access control computer, and others. The functionality of these components may in some cases be implemented by one of the illustrated components.

Embodiments of the invention involve the use of a token. The token is an electronic data structure that contains at least the following fields: a frequency field and a permission field. The token could be constructed according to the JSON Web Token standard, for example.

The frequency field of the token is configured to hold a frequency value that specifies a frequency at which an operation relating to the token is allowed to be performed. The permission field is configured to hold a permission value that specifies an allowed value or range of allowed values for a parameter associated with an action that the token is usable in authorising. Optionally the token can also include an expiry timestamp field that includes an expiry timestamp, this specifying a date and time on which the token expires (i.e. is no longer valid and cannot be used in authorising an action relating to a user). If present, the expiry timestamp can be specified as a UTC value, for example. To prevent tokens from expiring when an expiry timestamp is used, it may be allowed to set the expiry timestamp to a date far in the future, or a null value, or to leave the expiry timestamp field empty, for example.

The frequency value and permission value can be set by the user, e.g. during an enrolment or onboarding process. This advantageously provides the user with a mechanism for controlling the use of the token. This is important as the token is used in authorising an action relating to the user, meaning that the user is given control over elements of the authorising, e.g. the amount of and/or frequency with which authorisation to make use of user assets such as funds or personal data is granted to third parties, for example. The token allows the user to have confidence that their assets will only be used in the manner they dictate through configuration of the token.

It will be appreciated that the function of the frequency value is to place a restriction on how often the token can be used to authorise a particular action. The frequency value can be specified as a literal frequency, e.g. once per day, or it can be specified as a duration of time, e.g. one day. These implementations are equivalent from the perspective of the invention and accordingly the term 'frequency value' and 'frequency' is to be understood as encompassing an expression in terms of a rate and also an expression in terms of a time period.

Some exemplary tokens according to the invention are discussed directly below.

The token can be a token associated with an amount of an asset, e.g. a currency (at times referred to herein as a currency token'). In this case the currency token further includes a currency value field that is configured to hold a currency value. The operation relating to the token discussed above can be a 'top-up' operation in which the currency value is topped up (i.e. overwritten) to a maximum amount of currency that is allowed to be associated with currency token. The maximum amount of currency is defined by the permission value of the currency token. An exemplary currency token can include values as follows:
Permission value = $100
Frequency = weekly
Currency value = $72.34

In this example, the maximum amount of currency that is allowed to be associated with the currency token is $100. The currency value is currently $72.34, indicating that since the token was last topped up (to $100), the token has been used to authorise a total spend of $27.66. This could be in one transaction for $27.66, or multiple transactions each for less than $27.66 but which cumulatively add up to $27.66.

The frequency value is weekly, indicating that this particular currency token can be topped up to $100 at a maximum frequency of once per week, or equivalently a time period of at least one week must pass between adjacent top up operations.

It will be appreciated that these values are purely exemplary and that the invention can in practice have any frequency value, currency value and permission value as deemed appropriate by the skilled person according to the specifics of the situation at hand. For example, in the case where the currency token is to be used on a transit system, a configuration as follows may be beneficial:
Permission value = $10
Frequency = daily
Currency value = $10

The currency value of a currency token is updated each time the token is involved in a transaction to reflect the fact that some or all of the remaining currency associated with the currency token, as specified by the currency value, is deducted as payment in the transaction.

An attempt to perform a top up operation can be triggered by a particular condition or set of conditions being met. The condition could be, for example, based on a comparison between the currency value and the permission value. For example, it could be the case that a top up operation is attempted when it is detected that the currency value is less than or equal to a threshold percentage of the permission value, e.g. less than or equal to 25% of the permission value. In such circumstances a check may first be performed against a log to determine when the most recent top up operation occurred, with this being compared with the frequency value to determine whether or not a top up can be made. In the case where a top up can be made and the currency value is less than or equal to the threshold percentage, a top up operation can be performed to overwrite the currency value with the permission value (i.e. set the token currency value equal to the maximum allowable value to top up the token).

A currency token as described above can be used in the case where the action relating to a user that is authorised through use of the token is an electronic transaction, particularly an e-commerce (a.k.a. card not present) transaction. The currency token can be used to make a payment of any amount up to the amount of the currency value. As the currency value is at most set equal to the permission value, it will be appreciated that the permission value acts as a cap that sets the maximum amount that can be spent in a single transaction using the currency token. This, combined with the frequency value, sets a maximum amount that can be spent over a given time period using the currency token. For example, the second example above can be used to spend a maximum of $70 per week at a rate of $10 per day. This is advantageously fully controllable by the user during an enrolment process or a token set up process by allowing the user to specify the frequency and permission values.

The token can alternatively be an access token. In this case the action relating to a user that is authorised through use of the token is a request by a third party for access to an asset of the user, or a request for use of an asset of the user. This could be, for example, a request to access data stored in a data repository and which relates to the user. Typically the data repository is not in direct control of the user but is instead mediated by another computer suchj as an access control computer or token management computer 110. The request for the data could be made by a third party such as an insurance company, a bank, a medical institution, a governmental organisation, a merchant, and the like.

In the case of an access token the frequency value is the same as in the case of a currency token, but it instead specifies the maximum frequency at which a particular third party can access and/or use the user's asset. This could be, for example, a maximum frequency with which a particular organisation is granted access to read a user's data. Typical values might therefore be once per day, once per week, once per fortnight, once per month, and the like. The skilled person will be able to select a suitable value or set of values for user selection depending on the specifics of the situation at hand.

In the case of an access token the permission value is a data structure that defines a data access right and a data access level.

The data access right specifies a type of operation that can be performed on the data relating to the user. The data access right could therefore be 'view, 'update', 'update and delete', for example. It will be understood that 'view' can be implemented by providing read only permissions, 'update' can be implemented by providing full read and restricted write permissions (append only), and 'update and delete' can be implemented by providing full read and full write permissions.

The data access level specifies a type of data relating to the user that can be accessed using the token. This may be indicated by an integer value, e.g. '1', '2', '3', etc, although this is purely exemplary and alternative encoding schemes can be used. Each different data access level grants access to a different amount of user data. Using the encoding scheme above, a data access level of 1 may be the lowest data access level and thus permit access to relatively little data, e.g. just a first name and city of residence of the user. A data access level of 2 may grant access to the user's full name and address, and a data access level of 3 may grant access to the user's full name, address and medical records and/or financial records, for example.

More complex encoding schemes can be used where access levels are granted according to categories of data - e.g. an appropriate data access level for a clinician could be level 0 (no access) to financial records, level 3 (full access) to user personal information and also level 3 (full access) to user medical records. In this case the data access level takes the form of a data structure, e.g. a series of access levels each respectively associated with a data category.

As in the case of a currency token, a user can select the various components of the access token during an enrolment process or token setup or creation process. The user may set the data access right, data access level and/or frequency value. In this way the user retains control of their personal data and can also be confident that only organisations that should have access to this data do have access to it. The user may be able to adjust these and other parameters at any time.

Advantageously an access token of the type described above is used in the context of a centralised data repository. This is understood as meaning a single location (in the digital sense, not physical sense) where all user data is stored. Access to this data is controlled by access tokens. The user is able to edit their personal data stored in the centralised data repository as and when needed, e.g. to update their home address following a house move or to add a new medical or financial record. Any edits made by the user are immediately available to any third party having a valid access token, meaning that as soon as the user has committed the changes to the data repository they are available to the third parties. This solves the problem of having to send updates to personal data to each third party that requires it on an individual basis, greatly reducing the time and effort involved and correspondingly improving user experience. Additionally, an organisation can be confident that data retrieved using an access token is up to date.

In addition to user edits, third parties can be given the ability to edit the data as well using the access token. Specifically, the data access right of the access token can be set to 'update' or update and delete', enabling a third party in possession of this access token to edit the user's personal data, e.g. update medical records, update a credit score, update employment details, and the like. This further relieves the user of the burden of providing these updates on an individual basis.

The data in the data repository can take many forms. In the simplest case it can be just text, but the invention is not limited to this and also encompasses electronic files such as images, videos, digital documents like word processor files, spreadsheets, presentations and documents confirming to the Portable Document Format (PDF) being stored in the data repository. In such cases each of the electronic files can be assigned a data access level necessary for an access token holder to provide in order to access the file.

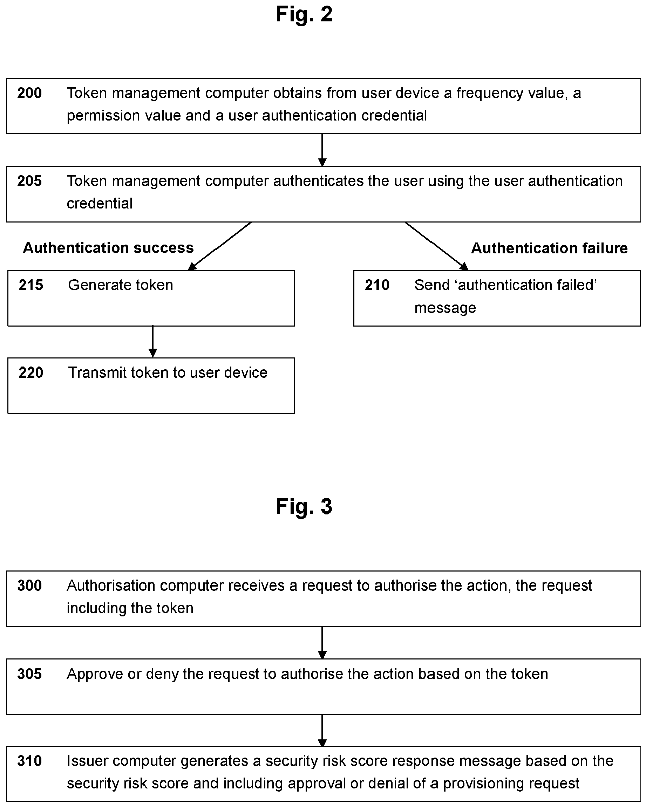

Fig. 2 shows a method for generating a token for use in authorising an action relating to a user. The token can an access token or a currency token as discussed above, for example.

In step 300, token management computer 110 obtains from user device 105 a frequency value, a permission value and a user authentication credential. The frequency value and permission value are as discussed above. The user authentication credential can take any form that is suitable for authenticating the user, e.g. a cryptogram conforming to the EMV standard as is known in the art per se, a username and password combination, a one-time PIN, and the like.

In step 205, token management computer 110 authenticates the user using the user authentication credential. Authentication can involve token management computer 110 generating a token generation authorisation request message that includes the user authentication credential. The token generation authorisation request message can be transmitted by token management computer 110 to credential authorisation computer 125. Credential authorisation computer 125 then performs an authorisation process to determine whether the authentication credential is genuine and valid. Such authorisation processes are known per se in the art and therefore details are not provided here. Credential authorisation computer 125 then transmits a token generation authorisation response message which is received by token management computer 110. The token generation authorisation response message indicates whether generation of the token is authorised or declined. In the case where the token generation is authorised, token management computer 110 may then generate the token, or it may receive an already generated token from credential authorisation computer 125, e.g. as part of the token generation authorisation response message.

The purpose of the authentication is to confirm that the user is who they purport to be and also to provide an assurance that the user does indeed wish to proceed with creation of a token that provides access to a user asset (e.g. personal data or user funds).

Additionally, in the case of a currency token the authentication credential can be used by credential authorisation computer 125 (which can be an issuer computer) to perform an authorisation process for a transaction from an account associated with the user with an amount equal to the permission value of the currency token. The authorisation process could transfer the funds to a neutral account (e.g. an escrow account) or it could place a block on the funds in the user's account to prevent them from being spent by the user. This secures funds equal to the amount specified in the permission value, meaning that eventual recipients of those funds (e.g. merchants) can advantageously have complete assurance that they will be paid.

If the authentication is unsuccessful then the token generation process ends and a suitable message is sent to the user indicating that the token generation failed (step 210). The user may be invited to resubmit their authentication credential to make another attempt at authentication.

In step 215, following successful authentication of the user, token management computer 110 generates a token. The generated token is of the type discussed above and comprises a data structure including at least a frequency field storing the frequency value and a permission field storing the permission value as discussed above. These are set based on the input received in step 200. The token could be a currency token or access token as discussed above. The token may be cryptographically signed in a manner known per se to prevent other parties from modifying the token in an unauthorised manner.

In step 220 token management computer 110 transmits the token to user device 105. User device 105 can store the token such that it is ready for future use. A process by which the token can be used by device 105 is shown in Fig. 3. This process takes place after step 220 of Fig. 2.

Referring now to Fig. 3, in step 300 authorisation computer 130 receives a request to authorise the action, the request including the token. Authorisation computer 130 could be an issuer computer, a payment network computer, a merchant computer or credential authorisation computer 125 in the case of a currency token, or it could be token management computer 110 or an access control computer in the case of an access token.

The request to authorise the action in the case of a currency token can be either a transaction authorisation request that includes an amount of the transaction or a top up authorisation request. The transaction/top up authorisation request can be received from user device 105 (e.g. originating from a digital wallet app) or from another computer such as token management computer 110, a merchant computer or a payment network computer.

The request to authorise the action in the case of an access token is a data access authorisation request that includes details of the data that the requestor is seeking access to. The requestor can be a third party computer administered by a third party that has a legitimate interest in obtaining data associated with the user. The third party could be, for example, a government, an insurance broker, a credit agency, and the like.

In step 305 authorisation computer 130 approves or denies the request to authorise the action based on the token. In the case of a currency token, the decision to approve or deny a transaction authorisation request can be based on a comparison between an amount of the transaction and the currency value of the token. If the amount of the transaction is greater than the currency value, authorisation computer 130 declines the request to authorise the transaction, whereas as if the amount of the transaction is less than or equal to the currency value of the token, authorisation computer 130 approves the request to authorise the transaction.

The decision to approve or deny a top up authorisation request can be based on a determination as to whether the difference between a timestamp of the top up authorisation request and a timestamp of the most recent top up request that has been approved for the token is greater than a time period corresponding to the frequency value. In some cases the frequency value is a time period and therefore a direct comparison can be made. In other cases the time period can be calculated by taking an inverse of the frequency value, e.g. if the frequency is 'daily', the time period would be one day (or an equivalent number of hours, minutes, seconds, etc.).

If the difference is positive or zero the top up request can be authorised because the token has not been used in another top up request more recently than is allowed. If the difference is negative, this indicates that insufficient time has elapsed since the most recent approved top up request for the token to authorise a further top up request. In this case, the top up request would be declined. This is an advantageous feature because it places a well-defined control over the total amount of the user's funds that can be used in transactions in a given time period. The user can therefore be confident that they will spend no more than the maximum amount as specified by the permission value of the token over the time period corresponding to the frequency value, for example.

In the case of an access token, the decision to approve or deny a data access authorisation request can be based on a comparison between the data access level included in the permission value of the token and the data access level assigned to the data in the repository as specified in the data access request. In the case where the data access level of the token is greater than or equal to the data access level assigned to the data in the repository, the data access authorisation request is granted and access to the data is provided in accordance with the data access right also stored in the permission value of the token. In the case where the data access level of the token is less than the data access level assigned to the data in the repository, the data access authorisation request is declined.

In any of the cases above, one or both of the following checks can also be made by authorisation computer 130. If the token has been cryptographically signed, the signature can be checked by authorisation computer 130. If the signature is not found to be valid then this is an indication that the token is corrupt or has been modified by an unauthorised party. In this case the request to authorise the action is preferably declined irrespective of the result of any other checks that have been performed.

If the token includes an expiry timestamp then a check can be performed to determine whether the token has expired. If the token has expired, the request to authorise the action is preferably declined irrespective of the result of any other checks that have been performed.

Preferably the signature check and/or expiry check are performed before any other checks. This prevents time and computational resources from being spent performing the other checks discussed above only to decline the request anyway based on the expiry timestamp and/or cryptographic signature being invalid. If both checks are performed, preferably the cryptographic signature check is performed first because if the signature is invalid, the expiry timestamp cannot be trusted and therefore checking the expiry timestamp in that case is an unnecessary expenditure of time and computational resources.

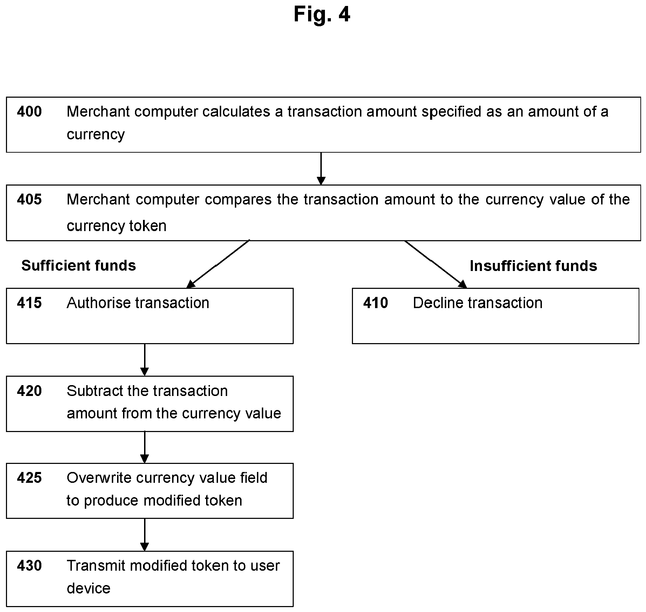

Fig. 4 shows a process that can be performed by a merchant computer to authorise an electronic payment transaction using a currency token of the type discussed above. The currency token can be provided to the merchant computer by user device 105, for example a digital wallet app on user device 105, or by token management computer 110 on behalf of a user.

In step 400, the merchant computer calculates a transaction amount specified as an amount of a currency. Such calculations are known in the art and so details are not provided here.

In step 405, the merchant computer compares the transaction amount to the currency value of the currency token. In the case where the transaction amount is greater than the currency value the merchant computer declines the transaction (step 410) because in that case there are insufficient funds associated with the token to cover the cost of the transaction.

In the case where the transaction amount is less than or equal to the currency value, merchant computer proceeds to step 415 where it authorises the transaction. It is important to note here that this authorisation can be performed by the merchant alone, i.e. the merchant does not need to contact an issuer to determine whether or not the user attempting to make a payment has sufficient funds in their account to cover the payment. This is because the token generation process discussed above in connection with Fig. 2 has already ensured that the user account has sufficient funds to cover up to the permission value of currency. Since the currency value can be at most equal to the permission value (e.g. immediately after a top up of the token has been performed), it is not possible to spend funds that the user does not have using a token configured in accordance with the invention. This advantageously provides a strong assurance to the merchant that they will be paid for the goods and/or services the merchant is providing.

Additionally the removal of the need to contact an issuer computer, for example, reduces the total time taken for the transaction to be completed as time is not spent sending a message to the issuer computer and waiting for a response. Furthermore, it is possible to perform transactions in locations where a data connection to the internet or other such large-scale network is not available. This is because transactions need only involve the merchant computer and user device and communication between these two devices can take place over a short-range channel such as Bluetooth^{®}, NFC, infrared and the like.

In the case where the transaction is authorised, the process moves to step 420 in which the merchant computer subtracts the transaction amount from the currency value to produce a new currency value. It will be appreciated that the new currency value is the amount of funds remaining associated with the token upon completion of the transaction. The new currency value ranges between zero and the predetermined value less one fundamental unit of currency (e.g. one cent in the case of US dollars).

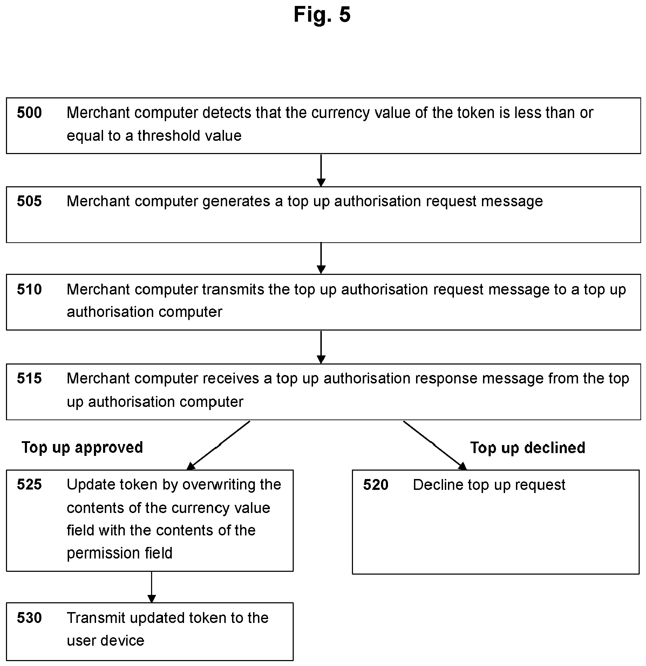

A check may be performed as part of step 510 to determine whether the new currency value is less than or equal to a threshold value, e.g. 25% of the permission value. If it is found that the new currency value is less than the threshold value, a top up can be performed as part of this step in accordance with the method of Fig. 5 described below.

In step 425 the merchant computer overwrites the contents of the currency value field with the new currency value to produce a modified token. A digital signature may be applied to the modified token by the merchant. The digital signature may be based on a key pair provided to the merchant by token management computer 110. Once finalised, in step 430 the modified token is transmitted to the user device. The user device can now use the modified token in future transactions.

Fig. 5 shows a process that can be performed by the merchant computer to top up a currency token. The process of Fig. 5 can be performed as part of step 425 of Fig. 4, or it can be performed separately from the process of Fig. 4.

In step 500 the merchant computer detects that the currency value of the token is less than or equal to a threshold value. The threshold value is preferably defined with reference to the permission value, e.g. 25% of the permission value, but this is not essential and other forms of threshold value can be used instead.

In step 505 the merchant computer generates a top up authorisation request message. The top up authorisation request message requests authorisation to overwrite the currency value of the token with the permission value, i.e. to top up the funds associated with the token to the permission value.

In step 510 the merchant computer transmits the top up authorisation request message to a top up authorisation computer. The top up authorisation computer could be token platform computer 110 or an issuer computer, for example.

In step 515 the merchant computer receives a top up authorisation response message from the top up authorisation computer. The top up authorisation response message indicates whether the top up request has been approved (step 525) or declined (step 520). In step 525, that is the case where the top up authorisation response message indicates approval, the merchant computer updates the token by overwriting the contents of the currency value field with the contents of the permission field. This has the effect of assigning funds equal to the permission value to the token, i.e. topping up the funds associated with the token to the permission value.

In step 530, the merchant computer transmits the updated token to the user device. Before doing so the merchant computer may cryptographically sign the updated token to indicate that it is genuine.

In the case of step 520 where the top up request is declined, a reason may be given such as 'token expired', 'token topped up more recently than frequency value allows', etc. Error codes can be used to communicate this information.

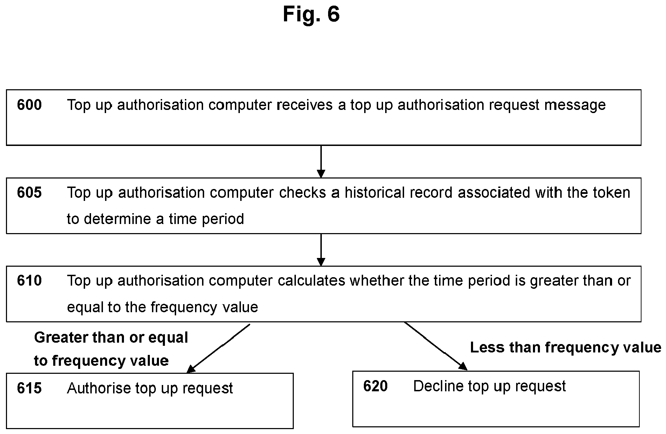

Fig. 6 shows a process for authorising a top up request. The process of Fig. 6 can be performed by the top up authorisation computer and is complementary to the process of Fig. 5.

In step 600 the top up authorisation computer receives a top up authorisation request message, e.g. from the merchant computer, see step 510 of Fig. 5. The top up authorisation request message can include the token, or provide a pointer (e.g. a URL) to a location where the token can be accessed. In step 605 the top up authorisation computer checks a historical record associated with the token to determine a time period between a most recent top up of the token and a time associated with the top up authorisation request message (e.g. a UTC timestamp).

In step 610 the top up authorisation computer calculates whether the time period is greater than or equal to the frequency value. This calculation can be done in the manner discussed earlier in this specification. In the case where the time period is greater than or equal to the frequency value, the process moves to step 615 in which the top up request is approved. Approval involves the top up authorisation computer deducing an amount from an account of the user that is equal to the permission value and including in the top up authorisation response message an approval value. The deducted amount may be frozen in the user's account such that it is unavailable for use. The amount frozen may be equal to the permission value, or if some funds are already frozen then a further amount equal to the permission value minus any unused portion of these frozen funds may be frozen. In this way it is guaranteed that the topped up token can be funded by the user whilst also avoiding the inconvenience of freezing more funds in the user account that is necessary.

In the case where the time period is less than the frequency value, the process moves to step 620 in which the top up request is declined. This prevents top ups from being performed more often than the user expects.

In an embodiment the token of the invention can be used in a transit system. Here, a transit system is understood to refer to any public transportation network capable of transporting passengers. Examples include but are not limited to: a subway network, a rail network, an underground rail network, and the like. A feature that characterises such transit systems is that it is necessary for passengers to pay a fare to use the transit system. Often a barrier is in place to prevent passengers from entering and/or exiting the transit system until a payment has been validly made. The barrier can be computer-controlled and linked to a transit system computer that is capable of taking a payment and operating the barrier. Tokens according to the invention, and in particular currency tokens as described above, find utility in a transit system of this type.

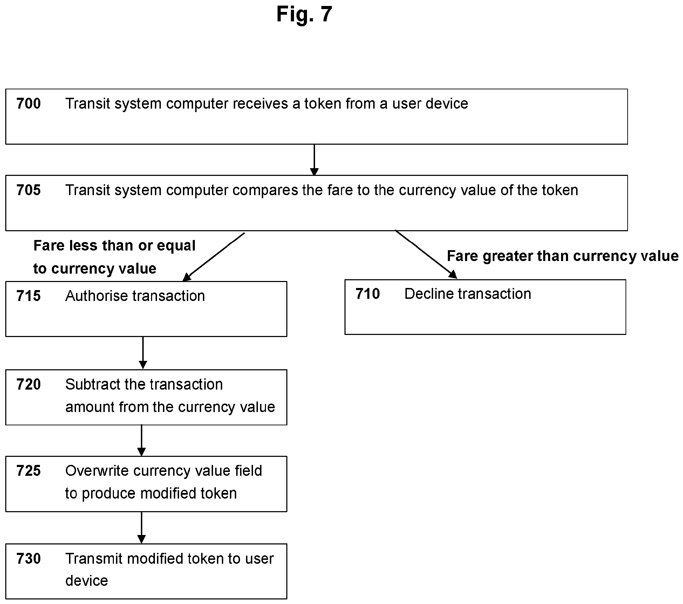

Fig. 7 shows a process that can be performed by a transit system computer to approve or deny an electronic payment made in connection with the transit system, e.g. to enter or exit the transit system.

In step 700, the transit system computer receives a token from user device 105. The token is preferably a currency token as discussed above. The token can be transmitted from user device 105 to the transmit system computer using a short range communication channel such as NFC, Bluetooth^{®}, infra-red, and the like.

In step 705 the transit system computer calculates a fare specified as an amount of a currency. Fare calculations are known per se in the art and therefore details of this calculation are not provided here. In the case where the user's journey is not known at this point and hence the fare is not known, a nominal or maximum fare can be output as a result of this calculation.

In step 710 the transit system computer compares the fare to the currency value of the token.

In the case where the fare is greater than the currency value, the transit system computer declines the transaction (step 710). Before declining the transaction, the transit system computer may attempt to perform a top up operation by performing the steps of Fig. 5, with it being understood that the transit system computer performs the actions equivalent to those of the merchant computer discussed in relation to Fig. 5. If the top up is successful, the transit system computer can repeat step 705 using the newly topped up token.

In the case where the fare is less than or equal to the currency value, in step 715 the transit system computer authorises the transaction. This step is equivalent to step 415 of Fig 4. Following this, in step 720 the transit system computer subtracts the fare from the currency value to produce a new currency value and in step 725 overwrites the contents of the currency value field with the new currency value to produce a modified token. These steps are equivalent to steps 420 and 425 of Fig. 4.

After authorising the transaction, assuming the transaction has been approved the transit system computer may take action to enable the user to enter or exit an area of the transit system, e.g. a command to cause a barrier to open such that the user is able to enter or exit a region of the transit system can be transmitted by the transit system computer. 'Open' here is to be understood as meaning moving the barrier from the path of the user, and therefore encompasses actions like raising, lowering, sliding to the side, unlocking a barrier that is then subsequently moved manually by the user, and the like.

In step 730 the transmit system computer transmits the modified token to user device 105. This step is equivalent to step 430 of Fig. 4. This enables the user device to make use of the modified token in future transactions, e.g., within the transit system or elsewhere.

Advantageously the transit system operator can be confident that the fare required will be paid, i.e. fraud will not take place. This is because it is known at the time of use of the token that the currency value is already reserved for payment to the transit system operator. An attempt to commit fraud by removing a payment mechanism mid-journey will not be successful. This is because the funds to pay the fare have already been earmarked for use with the token and authorised for such use (e.g. by an issuer) meaning that removal of the payment mechanism mid-journey will not have any effect. This also means that there is no need for the transit system computer to communicate with an external computer such as an issuer computer to seek authorisation for a transaction using the token. This reduces the time between the user interacting with the transit system computer with user device 105 (e.g. tapping an NFC-enabled mobile phone on an NFC reader coupled to the transit system computer) and the transit system computer taking an action to enable the user to move to another region in the transit system (e.g. opening a barrier).

Failure to provide the token on exit from the transit system can be handled by introducing a fare structure that has a fixed maximum fare which will automatically be incurred if an exit event is not recorded by the transit system within a threshold timeframe from entry, e.g. at the time the transit system closes.

Additionally, the user experience is improved. Users are able to confidently specify a maximum amount that can be used for travel on the transit system in advance of travel and are also able to automatically top up the token to this maximum amount. In connection with this latter point user device 105 can be configured to perform a top up operation by performing the steps of Fig. 5, with it being understood that user device 105 performs actions equivalent to those of the merchant computer discussed in relation to Fig. 5.

Advantageously, user device top up attempts can be scheduled in a top up program. This can be scheduled around a likely user travel pattern, e.g. one or more top up attempts may be made Monday to Friday between 12am and 6am in the user's local time zone to ensure that the user has a topped up token ready for use in a daily commute to work. This schedule for topping up can be configured by the user, perhaps as part of an onboarding or enrolment process. A further advantage from a user experience perspective is that if the user misses one or more days in a scheduled top up program of this type, e.g. due to illness or a vacation, the currency value will simply roll over from the previous day without any action on the user's part. Therefore, the user does not need to be concerned about being overcharged or otherwise locking up more of their funds than necessary.

In another embodiment a token according to the invention can be used in a data access system. In this case the action relating to a user that is authorised through use of the token is a request by a third party for access to / use of data stored in a data repository and which relates to the user. Typically the data repository is not in direct control of the user. The request for the data could be made by a third party such as an insurance company, a bank, a medical institution, a governmental organisation, a merchant, and the like. Tokens according to the invention, and in particular access tokens as described above, find utility in a data access system of this type.

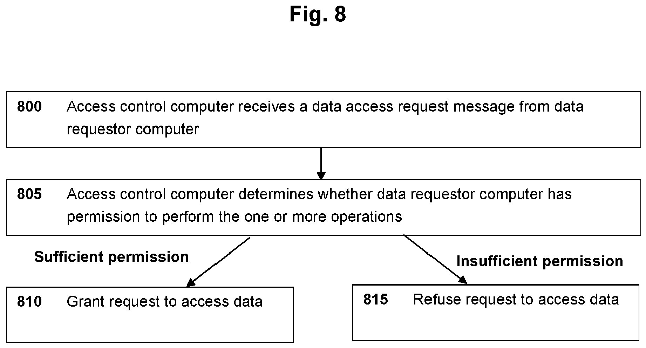

Fig. 8 shows a process that can be performed by an access control computer, e.g. token management computer 110, to approve or decline a third party request to access user data stored in data repository 120. The third party submits the request for access to the user data using a data requestor computer - this could be controlled by the third party directly, or operated on behalf of the third party.

In step 800, the access control computer receives a data access request message from the data requestor computer. The data access request message specifies requested data stored in data repository 120 and one or more operations to be performed on said data. The requested data identifies the data that the third party would like to make use of. The one or more operations specify the actions that the third party is seeking to take in relation to the requested data - e.g. 'read a user's name and address'; 'write a user address'; 'download a document containing information relating to the user', and the like. The data access request message also includes a token according to the invention, particularly an access token as discussed earlier.

In step 805, the access control computer determines whether the data requestor computer has permission to perform the one or more operations on the requested data based on the data access right and the data access level that are stored in the token provided by the data requestor computer. This determination can be carried out as discussed earlier in this specification. In brief, the access control computer can compare the data access level to the requested data to ensure that no element of the requested data has an assigned data access level that is greater than the data access level of the token. It will be appreciated that this check serves to ensure that the data requestor computer is authorised to access the data it is requesting.

The access control computer can compare the one or more operations to be performed on the data to the data access right to ensure that none of the operations requires an access right that is greater than that provided by token. The hierarchy of operations can be set by the skilled person according to the particular situation at hand. It is contemplated that is most cases it will be appropriate to define a hierarchy in which a write operation requires a greater data access right than a read operation, and a delete or overwrite operation requires a greater data access right than a write operation. Here, a write operation is understood to mean appending new data to an existing record whereas a delete or overwrite operation removes or replaces at least some data already present in the existing record, possibly in combination with appending new data.

The access control computer then grants (step 810) or denies (step 815) permission to access the requested data based on the determination of step 805.

In the case where permission is denied a data access response message including a value indicating that permission is denied can be generated by the access control computer and transmitted to the data requestor computer. The data access response message may include a reason for denying access, including but not limited to any one or more of: token invalid as it has expired; data access request exceeds allowed frequency of data access requests; requestor has insufficient data access level and/or data access right; token invalid as cryptographic signature cannot be verified; token invalid for unknown reason; and the like. This information may be conveyed by use of error codes as is known per se in the art.

In the case where permission is granted access control computer can facilitate access to the requested data. In some cases it may be appropriate to transmit the requested data to the data requestor, but in others this is not appropriate as this necessarily causes the access control computer to lose control of the transmitted data (i.e. retransmission of the data by the requestor computer to another party cannot be prevented). It is therefore expected that in some circumstances it will be preferred for the access control computer to serve as an intermediary between the requestor computer and the data repository, such that the requestor computer can perform the permitted operations on the data without actually extracting it from the data repository.

Additional processing can be performed as part of the access control computer determining whether to grant the requestor computer access to the requested data. A frequency at which the requestor computer has requested information about the user can be compared with the frequency value of the token and access can be denied if the requestor computer has requested access to the data too frequently. This can be done in the manner discussed earlier in connection with Fig. 6, with it being appreciated that the top up request of Fig. 6 is replaced with a data access request.

Additionally or alternatively the access control computer can check that the token has not expired. As discussed earlier in this specification, this involves comparing an expiry timestamp of the token against a current time and determining that the token is expired and hence invalid if the current time is after the expiry timestamp.

As a further option, access control computer can check that a cryptographic signature of the token is valid. Checking of cryptographic signatures is known per se and so details are not provided here.

If used, preferably one or more of the checks described directly above is performed before the comparison of the data access level and data access right takes place. This is because there is no need to expend computational resources and time performing the data access level and data access right checks in the case where the token is expired or not correctly digitally signed, or where the requestor computer is prohibited from gaining any access for request frequency reasons. This can be particularly advantageous in the case of a real-time system in which responses from the access control computer are required in real-time, i.e. such that there is an imperceptible or short delay (e.g. 0.5-5 seconds) from the perspective of the user.

From time to time, it may be necessary for the user data held in the repository to be updated or otherwise modified. This type of operation can be handled by the access control computer, perhaps on receipt of a request from user device 105 or another computer acting on behalf of the user. The request may be facilitated by a token, particularly an access token, having a data access right that permits write, delete and/or overwrite operations. Advantageously this enables a user to manage their data in a centralised manner such that there is no need for the user to send out updates to each interested party when the user's data changes.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

Any of the previously described operations or steps can be implemented by a computer executing a set of instructions that cause the computer to carry out the operations or steps. The set of instructions can be stored on a computer-readable medium or media. In some cases the computer-readable medium can be a "non-transitory computer-readable media". This is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

The following clauses set out additional embodiments of the invention.

Clause 1: A computer-implemented method for generating a token for use in authorising an action relating to a user, the method comprising: obtaining, by a token management computer and from a user device, a frequency value, a permission value and a user authentication credential, wherein the frequency value specifies a frequency at which an operation relating to the token is allowed to be performed, and the permission value specifies an allowed value or range of allowed values for a parameter associated with the action; and authenticating, by the token management computer, the user using the user authentication credential; following successful authentication of the user: generating, by the token management computer, a token, the token comprising a data structure including at least a frequency field storing the frequency value and a permission field storing the permission value, the token associated with the user; and transmitting the token to the user device.

Clause 2: The computer-implemented method of clause 1, wherein authenticating the user comprises: generating, by the token management computer, a token generation authorisation request message including the user authentication credential; transmitting, by the token management computer, the token generation authorisation request message to a credential authorisation computer; and receiving, by the token management computer, a token generation authorisation response message from the credential authorisation computer indicating whether generation of the token is authorised or declined.

Clause 3: The computer-implemented method of clause 1 or clause 2, further comprising, after the transmitting the token to the user device: receiving, by an authorisation computer, a request to authorise the action, the request including the token; based on the token, approving or denying the request by the authorisation computer.

Clause 4: The computer-implemented method of clause 3, wherein the action is an electronic payment transaction, the permission value is a maximum amount of a currency that can be associated with the token, the token further comprises a currency value field that holds a currency value specifying an amount of a currency currently associated with the token and the authorisation computer is a merchant computer.

Clause 5: The computer-implemented method of clause 4, further comprising, as part of the approving or denying the request: calculating, by the merchant computer, a transaction amount specified as an amount of a currency; comparing, by the merchant computer, the transaction amount to the currency value; and if the transaction amount is less than or equal to the currency value, the method further comprises, by the merchant computer: authorising the transaction; subtracting the transaction amount from the currency value to produce a new currency value; overwriting the contents of the currency value field with the new currency value to produce a modified token; and transmitting the modified token to the user device.

Clause 6: The computer-implemented method of clause 4 or clause 5, wherein the operation is a top-up operation, the method further comprising: detecting, by the merchant computer, that the currency value is less than or equal to a threshold value; generating, by the merchant computer, a top up authorisation request message, the top up authorisation request message requesting authorisation to overwrite the currency value with the permission value; transmitting, by the merchant computer, the top up authorisation request message to a top up authorisation computer; receiving, by the merchant computer, a top up authorisation response message from the top up authorisation computer; and in the case where the top up authorisation response message indicates approval, updating the token by overwriting the contents of the currency value field with the contents of the permission field; and transmitting the updated token to the user device.

Clause 7: The computer-implemented method of clause 6, further comprising, by the top up authorisation computer: responsive to receiving the top up authorisation request message, checking a historical record associated with the token to determine a time period between a most recent top up of the token and a time associated with the top up authorisation request message; calculating whether the time period is greater than or equal to the frequency value; in the case where the time period is greater than or equal to the frequency value, approving the top up request by deducting an amount from an account of the user that is equal to the permission value and including in the top up authorisation response message an approval value; in the case where the time period is less than the frequency value, denying the top up request by including in the top up authorisation response message a decline value.

Clause 8: The computer-implemented method of clause 3, wherein the action is an electronic payment transaction in a transit system, the permission value is a maximum amount of a currency that can be associated with the token, and the token further comprises a currency value field that holds a currency value specifying an amount of a currency currently associated with the token and the authorisation computer is a transit system computer.

Clause 9: The computer-implemented method of clause 8, further comprising, as part of the approving or denying the request: receiving, from the user device, the token; calculating, by the transit system computer, a fare specified as an amount of a currency; comparing, by the transit system computer, the fare to the currency value; and if the fare is less than or equal to the currency value, the method further comprises, by the transit system computer: authorising the transaction; deducting the fare from the currency value to produce a new currency value; overwriting the contents of the currency value field with the new currency value to produce a modified token; and transmitting the modified token to the user device .

Clause 10: The computer-implemented method of clause 9, further comprising, following the transit system computer authorising the transaction: transmitting, by the transit system computer, a command to cause a barrier to open such that the user of the user device is able to enter or exit a region of the transit system.

Clause 11: The computer-implemented method of any one of clauses 8 to 10, further comprising: detecting, by the user device, that the currency value is less than or equal to a threshold value; generating, by the user device, a top up authorisation request message, the top up authorisation request message requesting authorisation to overwrite the currency value with the permission value; transmitting, by the user device, the top up authorisation request message to a top up authorisation computer; receiving, by the user device, a top up authorisation response message from the top up authorisation computer; and in the case where the top up authorisation response message indicates approval, updating the token by overwriting the contents of the current value field with the contents of the permission field; and storing the updated token on the user device.

Clause 12: The computer-implemented method of clause 11, further comprising, by the top up authorisation computer: responsive to receiving the top up authorisation request message, checking a historical record associated with the token to determine a time period between a most recent adjustment of the token and a time associated with the authorisation request message; calculating whether the time period is greater than or equal to the frequency value; in the case where the time period is greater than or equal to the frequency value, approving the top up request by deducting an amount from an account of the user that is equal to the permission value and including in the top up authorisation response message an approval value; in the case where the time period is less than the frequency value, denying the top up request by including in the top up authorisation response message a decline value.

Clause 13: The computer-implemented method of clause 3, wherein the action is accessing data relating to the user from a data repository and the permission value is a data structure defining a data access right and a data access level, the data access right specifying a type of operation that can be performed on the data relating to the user and the data access level specifying a type of data relating to the user that can be accessed using the token.

Clause 14: The computer-implemented method of clause 13, further comprising: receiving, by an access control computer, a data access request message from a requestor computer, the data access request message specifying requested data stored in the data repository and one or more operations to be performed on said data, the data access request message also including the token; determining, by the access control computer, whether the requestor computer has permission to perform the one or more operations on the requested data based on the data access right and the data access level; and granting or denying permission, by the data access computer, based on the determining.

Clause 15: The computer-implemented method of clause 14, further comprising, as part of the determining by the access control computer whether the requestor computer has permission to perform the one or more operations: checking a historical record associated with the token to determine a time period between a most recent request by the requestor computer and a time associated with the data access request message; calculating whether the time period is greater than or equal to the frequency value; in the case where the time period is less than the frequency value, denying the data requestor computer permission to access said data.

Clause 16:The computer-implemented method of clause 13 or clause 14, further comprising as part of the determining by the access control computer whether the requestor computer has permission to perform the one or more operations: comparing an expiry timestamp of the token with a current time; and in the case where the current time is later than the expiry timestamp, denying the requestor computer permission to access said data.

Clause 17: The computer-implemented method of any one of clauses 13 to 16, further comprising, by the access control computer: receiving updated data relating to the user; and storing the updated data in the data repository in association with the user.

Clause 18: The computer-implemented method of any one of clauses 13 to 17, further comprising: receiving, by the token management computer and from the user device, a token update request message, the token update request message including a user credential and one or more of a modified data access right and a modified data access level; authenticating the user based on the user credential and, in the case where the authenticating of the user is successful: generating an updated token having the modified data access right and/or the modified data access level; and transmitting the updated token to the user device.

Clause 19: A computer-readable medium comprising computer-readable instructions stored thereon which, when executed by a computer, cause the computer to perform the method of any preceding clause.

Clause 20: One or more computers configured to perform the method of any one of clauses 1 to 18.

## Claims

1. A computer-implemented method for generating a token for use in authorising an action relating to a user, the method comprising:
obtaining, by a token management computer and from a user device, a frequency value, a permission value and a user authentication credential, wherein the frequency value specifies a frequency at which an operation relating to the token is allowed to be performed, and the permission value specifies an allowed value or range of allowed values for a parameter associated with the action; and
authenticating, by the token management computer, the user using the user authentication credential;
following successful authentication of the user:
generating, by the token management computer, a token, the token comprising a data structure including at least a frequency field storing the frequency value and a permission field storing the permission value, the token associated with the user; and
transmitting the token to the user device.

2. The computer-implemented method of claim 1, wherein authenticating the user comprises:
generating, by the token management computer, a token generation authorisation request message including the user authentication credential;
transmitting, by the token management computer, the token generation authorisation request message to a credential authorisation computer; and
receiving, by the token management computer, a token generation authorisation response message from the credential authorisation computer indicating whether generation of the token is authorised or declined.

3. The computer-implemented method of claim 1 or claim 2, further comprising, after the transmitting the token to the user device:
receiving, by an authorisation computer, a request to authorise the action, the request including the token;
based on the token, approving or denying the request by the authorisation computer.

4. The computer-implemented method of claim 3, wherein the action is an electronic payment transaction, the permission value is a maximum amount of a currency that can be associated with the token, the token further comprises a currency value field that holds a currency value specifying an amount of a currency currently associated with the token and the authorisation computer is a merchant computer.

5. The computer-implemented method of claim 4, further comprising, as part of the approving or denying the request:
calculating, by the merchant computer, a transaction amount specified as an amount of a currency;
comparing, by the merchant computer, the transaction amount to the currency value; and
if the transaction amount is less than or equal to the currency value, the method further comprises, by the merchant computer:
authorising the transaction;
subtracting the transaction amount from the currency value to produce a new currency value;
overwriting the contents of the currency value field with the new currency value to produce a modified token; and
transmitting the modified token to the user device.

6. The computer-implemented method of claim 4 or claim 5, wherein the operation is a top-up operation, the method further comprising:
detecting, by the merchant computer, that the currency value is less than or equal to a threshold value;
generating, by the merchant computer, a top up authorisation request message, the top up authorisation request message requesting authorisation to overwrite the currency value with the permission value;
transmitting, by the merchant computer, the top up authorisation request message to a top up authorisation computer;
receiving, by the merchant computer, a top up authorisation response message from the top up authorisation computer; and
in the case where the top up authorisation response message indicates approval, updating the token by overwriting the contents of the currency value field with the contents of the permission field; and transmitting the updated token to the user device.

7. The computer-implemented method of claim 3, wherein the action is an electronic payment transaction in a transit system, the permission value is a maximum amount of a currency that can be associated with the token, and the token further comprises a currency value field that holds a currency value specifying an amount of a currency currently associated with the token and the authorisation computer is a transit system computer.

8. The computer-implemented method of claim 7, further comprising, as part of the approving or denying the request:
receiving, from the user device, the token;
calculating, by the transit system computer, a fare specified as an amount of a currency;
comparing, by the transit system computer, the fare to the currency value; and
if the fare is less than or equal to the currency value, the method further comprises, by the transit system computer:
authorising the transaction;
deducting the fare from the currency value to produce a new currency value;
overwriting the contents of the currency value field with the new currency value to produce a modified token; and
transmitting the modified token to the user device .

9. The computer-implemented method of claim 8, further comprising, following the transit system computer authorising the transaction:
transmitting, by the transit system computer, a command to cause a barrier to open such that the user of the user device is able to enter or exit a region of the transit system.

10. The computer-implemented method of any one of claims 7 to 9, further comprising:
detecting, by the user device, that the currency value is less than or equal to a threshold value;
generating, by the user device, a top up authorisation request message, the top up authorisation request message requesting authorisation to overwrite the currency value with the permission value;
transmitting, by the user device, the top up authorisation request message to a top up authorisation computer;
receiving, by the user device, a top up authorisation response message from the top up authorisation computer; and
in the case where the top up authorisation response message indicates approval, updating the token by overwriting the contents of the current value field with the contents of the permission field; and storing the updated token on the user device.

11. The computer-implemented method of claim 6 or claim 10, further comprising, by the top up authorisation computer:
responsive to receiving the top up authorisation request message, checking a historical record associated with the token to determine a time period between a most recent adjustment of the token or a most recent top up of the token and a time associated with the top up authorisation request message;
calculating whether the time period is greater than or equal to the frequency value;
in the case where the time period is greater than or equal to the frequency value, approving the top up request by deducting an amount from an account of the user that is equal to the permission value and including in the top up authorisation response message an approval value;
in the case where the time period is less than the frequency value, denying the top up request by including in the top up authorisation response message a decline value.

12. The computer-implemented method of claim 3, wherein the action is accessing data relating to the user from a data repository and the permission value is a data structure defining a data access right and a data access level, the data access right specifying a type of operation that can be performed on the data relating to the user and the data access level specifying a type of data relating to the user that can be accessed using the token.

13. The computer-implemented method of claim 12, further comprising:
receiving, by an access control computer, a data access request message from a requestor computer, the data access request message specifying requested data stored in the data repository and one or more operations to be performed on said data, the data access request message also including the token;
determining, by the access control computer, whether the requestor computer has permission to perform the one or more operations on the requested data based on the data access right and the data access level; and
granting or denying permission, by the data access computer, based on the determining.

14. The computer-implemented method of claim 13, further comprising, as part of the determining by the access control computer whether the requestor computer has permission to perform the one or more operations:
checking a historical record associated with the token to determine a time period between a most recent request by the requestor computer and a time associated with the data access request message;
calculating whether the time period is greater than or equal to the frequency value;
in the case where the time period is less than the frequency value, denying the data requestor computer permission to access said data.

15. The computer-implemented method of any one of claims 12 to 14, further comprising:
receiving, by the token management computer and from the user device, a token update request message, the token update request message including a user credential and one or more of a modified data access right and a modified data access level;
authenticating the user based on the user credential and, in the case where the authenticating of the user is successful:
generating an updated token having the modified data access right and/or the modified data access level; and
transmitting the updated token to the user device.
